# EUROPÄISCHE PATENTANMELDUNG

(11) **EP 2 603 055 A1**
(43) Veröffentlichungstag der Anmeldung: **12.06.2013**
(21) Anmeldenummer: 11192786.9
(22) Anmeldetag: 09.12.2011
(51) Int. Cl.: H05B 33/08

(54) **Verfahren zur Ansteuerung einer Mehrfarben-Signalanordnung sowie Mehrfarben-Signalanordnung**

(71) Anmelder: Eaton Industries GmbH, 53115 Bonn (DE)
(72) Erfinder: Reidt, Georg, 53913 Swisstal (DE)
(74) Vertreter: Leadbetter, Benedict

(57) **Zusammenfassung**

Die Erfindung betrifft ein Verfahren zur Ansteuerung einer Mehrfarben-Signalanordnung mit einer Mehrfarben-LED, einem Anschluss zur Spannungsversorgung und einem Steuereingang. Dabei wird der Steuereingang der Signalanordnung mit einem Steuerausgang einer ersten Steuereinheit zur Ansteuerung der Signalanordnung mittels Pulsweitenmodulationssignale (PWM-Signale) oder mit einem Steuerausgang einer zweiten Steuereinheit zur Ansteuerung der Signalanordnung mittels Bus-Kommunikation verbunden.
Nach dem Zuschalten einer Versorgungsspannung U_{B} zur Signalanordnung über den Anschluss zur Spannungsversorgung der Signalanordnung wird die Spannung U_{DI/Bus} am Steuereingang der Signalanordnung innerhalb einer zuvor festgelegten Zeitspanne Δt gemessen, wobei die erste Steuereinheit innerhalb der Zeitspanne Δt eine erste Spannung am Steuereingang aufweist, und die zweite Steuereinheit innerhalb der Zeitspanne Δt eine zweite Spannung am Steuereingang aufweist, wobei sich die erste Spannung und die zweite Spannung unterscheiden. Die Signalanordnung wird in Abhängigkeit von der gemessenen Spannung U_{DI/Bus} in einen BUS-Modus oder in einen PWM-Modus versetzt, wobei die Signalanordnung im BUS-Modus mittels Bus-Kommunikation angesteuert werden kann und die Signalanordnung im PWM-Modus mittels PWM-Signale angesteuert werden kann.

## Beschreibung

Die Erfindung betrifft ein Verfahren zur Ansteuerung einer Mehrfarben-Signalanordnung mit einer Mehrfarben-LED, einem Anschluss zur Spannungsversorgung und einem Steuereingang. Dabei wird der Steuereingang der Signalanordnung mit einem Steuerausgang einer ersten Steuereinheit zur Ansteuerung der Signalanordnung mittels Pulsweitenmodulationssignale (PWM-Signale) oder mit einem Steuerausgang einer zweiten Steuereinheit zur Ansteuerung der Signalanordnung mittels Bus-Kommunikation verbunden.

Heutzutage verfügen Anzeigeelemente und Signalanordnungen über Mehrfarben-LED zur Anzeige bzw. Signalisierung von Zuständen in elektronischen Systemen. Die Ansteuerung solcher Signalanordnungen erfordert die Bereitstellung einer dazu geeigneten Schnittstelle an der Signalanordnung. Üblicherweise wird die Signalanordnung mittels PWM-Signale von einer Speicherprogrammierten Steuerung (SPS) angesteuert, um eine variable Farbdarstellung zu ermöglichen. Alternativ wird, vor allem im automotiven Bereich, die Signalanordnung mittels Bus-Kommunikation durch eine geeignete Steuereinheit angesteuert, wobei die Signalanordnung in diesem Fall mit einer dazu geeigneten, speziellen Bus-Schnittstelle ausgestattet sein muss.

Somit kann die Signalanordnung üblicherweise nur entweder mittels PWM-Signale oder Bus-Kommunikation angesteuert werden, was ihren Einsatzbereich entsprechend einschränkt.

Die Aufgabe der vorliegenden Erfindung ist es daher, ein Verfahren zur Ansteuerung einer Signalanordnung bereitzustellen, das einen möglichst flexiblen Einsatz der Signalanordnung erlaubt.

Die der Erfindung zugrunde liegende Aufgabe wird durch die Merkmale des Anspruchs 1 gelöst. Die von Anspruch 1 abhängigen Ansprüche stellen vorteilhafte Ausführungsformen der Erfindung dar.

Demnach wird im Rahmen des erfindungsgemäßen Verfahrens die Mehrfarben-Signalanordnung, die über eine Merhrfarben-LED, einen Anschluss zur Spannungsversorgung der Signalanordnung sowie einen Steuereingang zur Ansteuerung der Signalanordnung verfügt, wahlweise mit einem Steuerausgang einer ersten Steuereinheit zur Ansteuerung der Signalanordnung mittels PWM-Signale oder mit einem Steuerausgang einer zweiten Steuereinheit zur Ansteuerung der Signalanordnung mittels Bus-Kommunikation verbunden. Bei der ersten Steuereinheit handelt es sich vorteilhaft um eine SPS, wobei die SPS vorzugsweise einen Ausgang zur Spannungsversorgung, zum Beispiel 24VDC und einen Digitalausgang zur Übertragung der PWM-Signale aufweist. Die zweite Steuereinheit ist vorteilhaft durch eine Bus-Master-Einrichtung zur Steuerung einer asymmetrischen Kommunikation realisiert, wie zum Beispiel einen LIN-Bus-Master, einer Single-Line-CAN-Steuereinheit oder dergleichen. Die zweite Steuereinheit weist einen Anschluss zur Spannungsversorgung und einen Anschluss zur Übertragung der Bus-Daten auf. Vorzugsweise wird ein Masse-Ausgang (GND) der zweiten Steuereinheit mit einem entsprechenden GND-Eingang der Signalanordnung verbunden, so dass damit das Bezugspotential für die asymmetrische Kommunikation hergestellt ist. Die zweite Steuereinheit kann vorteilhaft in einen Leistungsschalter integriert sein.

Erfindungsgemäß wird über den Anschluss zur Spannungsversorgung der Signalanordnung eine Versorgungsspannung U_{B}, von beispielsweise 24 V, zugeschaltet, so dass die Spannungsversorgung der Signalanordnung sichergestellt ist.

Durch die Herstellung der Verbindungen zur Spannungsversorgung und zur Ansteuerung der Signalanordnung wird die Signalanordnung in Betrieb genommen. Danach wird erfindungsgemäß innerhalb einer zuvor festgelegten Zeitspanne Δt, die zum Beispiel zwischen 100 ms und 1000 ms liegen kann, bevorzugt zwischen 200 ms und 700 ms liegt, die Spannung U_{DI/Bus} am Steuereingang der Signalanordnung gemessen. Dabei setzt das erfindungsgemäße Verfahren voraus, dass die erste Steuereinheit zumindest in einem Teilbereich innerhalb der Zeitspanne Δt eine erste Spannung aufweist, und dass die zweite Steuereinheit zumindest in einem Teilbereich innerhalb der Zeitspanne Δt eine zweite Spannung aufweist, und dass die erste Spannung sich von der zweiten Spannung unterscheidet. Dies wird bevorzugt durch eine entsprechende Programmierung der ersten bzw. der zweiten Steuereinheit erreicht. Anhand des festzustellenden Unterschieds zwischen der ersten und der zweiten Spannung kann damit zwischen den angeschlossenen Steuereinheiten differenziert werden. In Abhängigkeit von der gemessenen Spannung U_{DI/Bus} wird schließlich die Signalanordnung entweder in einen PWM-Modus versetzt, wenn die Signalanordnung mit der ersten Steuereinheit verbunden wurde, oder in einen BUS-Modus, wenn die Signalanordnung mit der zweiten Steuereinheit verbunden wurde. Wenn sich die Signalanordnung im PWM-Modus befindet, kann sie mittels PWM-Signale angesteuert werden, und wenn sich die Signalanordnung im BUS-Modus befindet, kann sie entsprechend mittels Bus-Kommunikation angesteuert werden.

Die Entscheidung, in welchen der beiden Modi die Signalanordnung versetzt wird, erfolgt vorzugsweise durch eine Auswertung der gemessenen Spannung U_{DI/Bus} Zum Beispiel ist die Auswertung derart, dass falls die Spannung U_{DI/Bus} einer zuvor festgelegten Bedingung genügt, das Signalelement in einen BUS-Modus versetzt wird, und falls die Spannung U_{DI/Bus} der Bedingung nicht genügt, das Signalelement in einen PWM-Modus versetzt wird. Bevorzugt wird eine Spannungsdifferenz ΔU, gebildet aus der Differenz zwischen der Spannung U_{B} und der Spannung U_{DI/Bus}, mit einem zuvor festgelegten Schwellenwert verglichen. Die Bedingung gilt dann als erfüllt, wenn ΔU kleiner der Schwellenwert ist.

In einer besonders bevorzugten Variante des Verfahrens wird die Spannung U_{DI/Bus} innerhalb der Zeitspanne Δt mehrfach gemessen, um eventuelle Fehlmessungen und dergleichen berücksichtigen zu können. Die Messung kann zum Beispiel 10 bis 50 Samples umfassen, wobei die Abtastung in einem geeigneten Zeit-Raster erfolgt, beispielsweise alle 10 ms. Zur Auswertung der Messungen werden dann die gemessenen Werte der Spannung U_{DI/Bus} herangezogen, wobei die Auswertung jede geeignete mathematische und/oder logische Verarbeitung der gemessenen Werte umfassen kann.

Eine bevorzugte Ausführungsform des erfindungsgemäßen Verfahrens sieht vor, dass die Steuersignale der an die Signalanordnung angeschlossenen Steuereinheit vom Steuereingang der Signalanordnung parallel an einen Universal-Asynchronous-Receiver-Transmitter-Eingang (UART-Eingang) und an einen, bevorzugt interruptgesteuerten, digitalen Eingang (DI-Eingang) eines Mikrocontrollers der Signalanordnung geleitet werden. Nachdem die Signalanordnung in den BUS-Modus versetzt wurde, werden die Steuersignale nur über den UART-Eingang ausgewertet, wohingegen die am DI-Eingang ankommenden Steuersignale vom Mikrocontroller nicht verwertet werden. Entsprechend werden die am UART-Eingang ankommenden Steuersignale vom Mikrocontroller nicht verwertet, wenn die Signalanordnung in den PWM-Modus versetzt wurde. In diesem Fall werden die Steuersignale nur über den DI-Eingang des Mikrocontrollers ausgewertet. Durch die parallele Datenführung wird erreicht, dass der Mikrocontroller beide Signalströme verarbeiten kann.

In einer weiteren bevorzugten Ausführungsform wird der Anschluss zur Spannungsversorgung der Signalanordnung mit einer externen Energieeinspeisung verbunden. Falls die Signalanordnung zur Signalisierung von Zuständen eines damit verbundenen Schaltgerätes vorgesehen ist, kann mit der externen Einspeisung erreicht werden, dass auch im Fall einer Stromunterbrechung am Schaltgerät, zum Beispiel durch eine Auslösung des Schalters, die Spannungsversorgung der die Signalanordnung ansteuernden Steuereinheit sowie der Signalanordnung selbst sichergestellt ist. Auf diese Weise kann die Signalanordnung auch in einem solchen Fall weiterhin zum Beispiel als Zustandsanzeige für den Schalter verwendet werden.

Vorteilhaft wird die Verbindung zwischen der Steuereinheit und der Signalanordnung dazu genutzt, Zustandsinformationen über die Steuereinheit und/oder über weitere an die Steuereinheit gebundene Geräte zu übermitteln. Falls, wie oben beschrieben, die Steuereinheit an ein Schaltgerät angeschlossen ist, so kann zum Beispiel mittels der Bus-Kommunikation Information über dessen Energieversorgung oder die Temperatur im Schalter an die Signalanordnung übermittelt und zur Verfügung gestellt werden. Bevorzugt werden die so übermittelten Daten bzw. Zustandsinformationen mittels einer geeigneten Schnittstelle der Signalanordnung zum Abrufen bereitgestellt. Falls die Signalanordnung mit einer Schnittstelle zur drahtlosen Kommunikation versehen ist, wie einer WLAN- oder Bluetooth-Schnittstelle, so können von der Steuereinheit übermittelte Diagnose- und/oder Statusdaten an ein zu deren Empfang geeignetes Gerät, wie ein SmartPhone, weitergeleitet werden.

Darüber hinaus betrifft die Erfindung eine Mehrfarben-Signalanordnung zur Durchführung des oben beschriebenen Verfahrens. Dabei weist die Mehrfarben-Signalanordnung jeweils einzelne der zuvor beschriebenen Eigenschaften und Funktionalitäten oder beliebige Kombinationen dieser Eigenschaften und Funktionalitäten auf, so dass mittels der Signalanordnung das erfindungsgemäße Verfahren in allen beschriebenen Ausführungsformen durchgeführt werden kann.

Die Erfindung wird ferner zur Veranschaulichung des Zusammenwirkens der einzelnen beim erfindungsgemäßen Verfahren verwendeten Komponenten in Verbindung mit den beiliegenden Figuren beschrieben. Es zeigen

Figur 1 eine zur Durchführung des erfindungsgemäßen Verfahrens geeignete Mehrfarben-Signalanordnung, wobei die Signalanordnung mit einer ersten Steuereinheit verbunden ist;

Figur 2 eine zur Durchführung des erfindungsgemäßen Verfahrens geeignete Mehrfarben-Signalanordnung, wobei die Signalanordnung mit einer zweiten Steuereinheit verbunden ist;

Figur 3 eine schematische Teil-Darstellung einer zur Durchführung des erfindungsgemäßen Verfahrens geeigneten Mehrfarben-Signalanordnung.

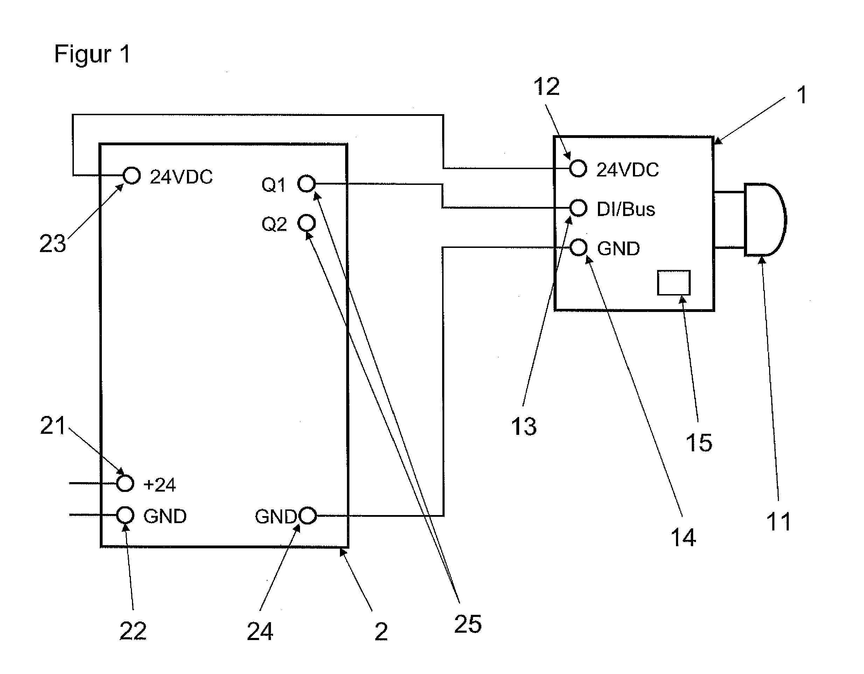

Im Einzelnen zeigt Figur 1 eine Mehrfarben-Signalanordnung 1. Die Signalanordnung 1 umfasst eine Mehrfarben-LED 11, die in diesem Fall als eine RGB-LED (Rot-Gelb-Blau-LED) realisiert ist. Ferner umfasst die Signalanordnung 1 einen Anschluss zur Spannungsversorgung 12, einen Steuereingang 13 und einen Masse-Anschluss 14. Der Steuereingang 12 wird mit einem der Steuerausgänge 25 einer ersten Steuereinheit 2 verbunden, die hier als eine SPS realisiert ist. Die erste Steuereinheit 2 umfasst ferner einen Spannungsversorgungsanschluss 21 zur Spannungsversorgung der Steuereinheit 2, so dass durch Verbinden eines Spannungsversorgungsanschlusses 23 mit dem Anschluss zur Spannungsversorgung 12 der Signalanordnung 1 der Signalanordnung 1 eine Versorgungsspannung zugeschaltet werden kann. Darüber hinaus weist die Steuereinheit 2 einen Masse-Anschluss 22, der mit Masse verbunden ist, so dass durch eine Verbindung eines weiteren Masse-Anschlusses 24 der Steuereinheit 2 mit dem Masse-Anschluss 14 der Signalanordnung 1 die Steuereinheit 2 und die Signalanordnung 1 auf gemeinsames Bezugspotential gebracht werden. Darüber hinaus umfasst die Signalanordnung 1 eine Schnittstelle zur drahtlosen Kommunikation 15 auf.

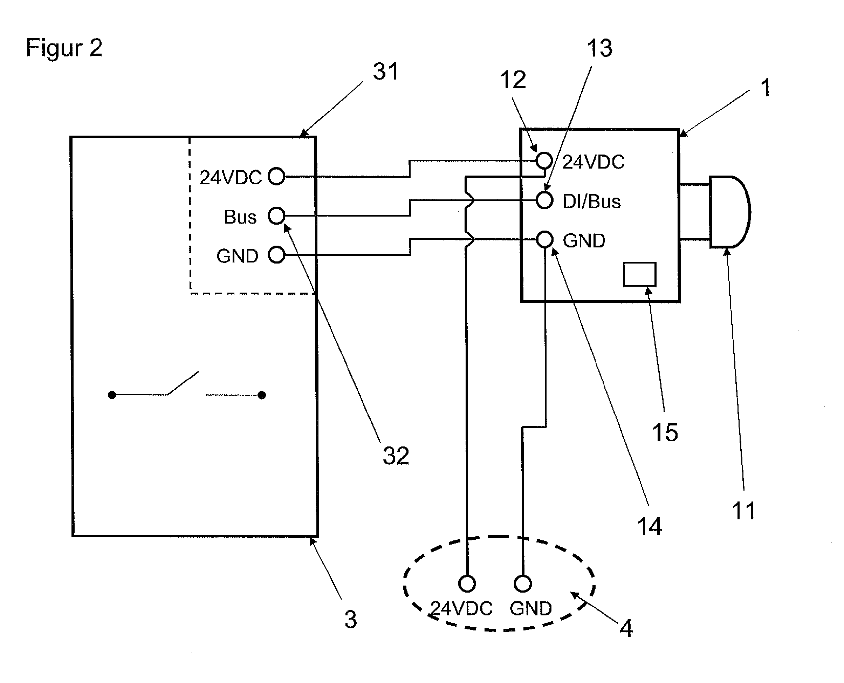

Figur 2 zeigt die Mehrfarben-Signalanordnung aus Figur 1, wobei gleiche oder gleichartige Elemente der Signalanordnung 1 mit gleichen Bezugszeichen gekennzeichnet wurden. Der Steuereingang 13 der Signalanordnung 1 wurde mit einem Steuerausgang 32 einer zweiten Steuereinheit 31 verbunden, wobei die zweite Steuereinheit 31 an ein Schaltgerät 3 angeschlossen ist. Hier ist die zweite Steuereinheit als ein LIN-Master realisiert, der die Signalanordnung mittels entsprechender LIN-Bus-Kommunikation ansteuert. Über die Verbindung zwischen dem Steuerausgang 32 und dem Steuereingang 13 findet die serielle Datenübertragung statt. Der Anschluss zur Spannungsversorgung 12 der Signalanordnung 1 ist mit dem entsprechenden Spannungsversorgungsanschluss der zweiten Steuereinheit 31 verbunden. Entsprechend ist der Masse-Anschluss 14 der Signalanordnung mit dem entsprechenden Masse-Anschluss der zweiten Steuereinheit 31 verbunden. Mittels zusätzlicher Klemmen sind der Anschluss zur Spannungsversorgung 12 und der Masse-Anschluss 14 jeweils mit entsprechenden Anschlüssen einer externen Energieeinspeisung 4 verbunden. Auf diese Weise kann die Energieversorgung der Steuereinheit 31 über die externe Einspeisung 4 erfolgen.

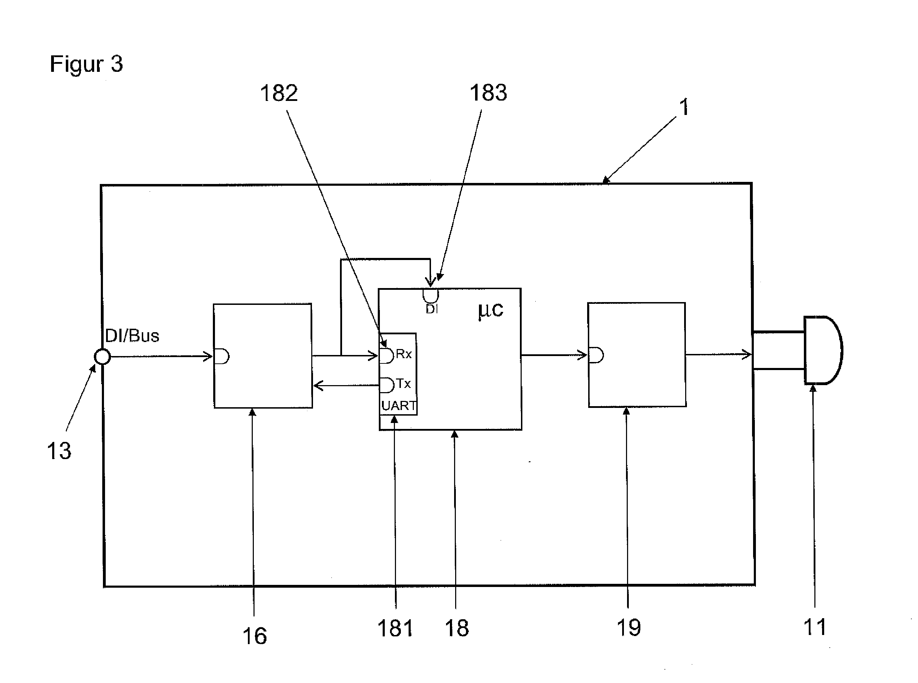

In Figur 3 wird eine vereinfachte Darstellung der Mehrfarben-Signalanordnung 1 aus Figuren 1 und 2 gezeigt, wobei gleiche oder gleichartige Elemente aus den beiden Figuren auch hier mit gleichen Bezugszeichen versehen wurden. In dieser Ansicht wurde nur der Steuereingang 13 der Signalanordnung 1 dargestellt, der mit dem Steuerausgang der ersten oder der zweiten Steuereinheit verbindbar ist. Die am Steuereingang 13 ankommenden Steuersignale werden zunächst an einen LIN-Transceiver 16 geleitet. Von dort aus werden die Steuersignale parallel an einen Rx-Eingang 182 einer UART-Schnittstelle 181 eines Mikrocontrollers 18 sowie an einen Digitaleingang 183 des Mikrocontrollers 18 weiter geleitet. Im BUS-Modus der Signalanordnung 1 werden die am Digitaleingang 183 ankommenden Steuersignale ignoriert, im PWM-Modus der Signalanordnung 1 werden die am UART 181 ankommenden Steuersignale ignoriert. Der Mikrocontroller 18 leitet die verarbeiteten Steuersignale an einen LED-Treiber 19 weiter, der die Mehrfarben-LED 11 entsprechend steuert. Zur besseren Übersicht ist hier der LED-Treiber 19 als eigenständiges Bauelement dargestellt. Es ist jedoch ebenso möglich, den Treiber 19 im Mikrocontroller 18 zu integrieren.

Anhand der Figur 3 wird ein Ausführungsbeispiel des erfindungsgemäßen Verfahrens erläutert. Über den Steuereingang 13 wird die Signalanordnung 1 mit einer SPS oder einem LIN-Master verbunden. Nach der Inbetriebnahme der Signalanordnung 1 und der SPS bzw. des LIN-Masters zum Zeitpunkt t₀ durch Zuschalten einer Versorgungsspannung von 24 V wird innerhalb einer Zeitspanne von 500 ms nach dem Zeitpunkt t₀ die Spannung am Steuereingang 13 abgetastet, damit die Signalanordnung erkennen kann, ob sie mit einem PWM-Signal angesteuert wird oder ob sie als LIN-Bus-Teilnehmer arbeiten muss. Der Betriebsmodus der Signalanordnung wird durch folgende Regel eingestellt: Falls für eine gewisse Zeit am Steuereingang 13 eine Spannung von 0 VDC gemessen wird, so wird in der Signalanordnung der PWM-Modus eingestellt; falls für eine gewisse Zeit am Steuereingang 13 eine Spannung von 24 VDC gemessen wird, so wird in der Signalanordnung der BUS-Modus eingestellt.

### Bezugszeichenliste

- 1: Mehrfarben-Signalanordnung
- 11: Mehrfarben-LED
- 12: Anschluss zur Spannungsversorgung
- 13: Steuereingang
- 14: Masse-Anschluss
- 15: Schnittstelle zur drahtlosen Kommunikation
- 16: LIN-Transceiver-Einheit
- 18: Mikrokontroller
- 181: UART
- 182: Rx-Eingang des UART
- 183: Digitaleingang des Mikrokontrollers
- 19: LED-Treiber
- 2: Speicherprogrammierte Steuerung
- 21: Spannungsversorgungsanschluss
- 22: Masse-Anschluss
- 23: Spannungsversorgungsanschluss
- 24: Masse-Anschluss
- 25: Steuerausgang
- 3: Leistungsschalter
- 31: LIN-Master
- 32: Steuerausgang
- 4: Spannungsversorgung

## Patentansprüche

1. Verfahren zur Ansteuerung einer Mehrfarben-Signalanordnung (1) mit einer Mehrfarben-LED (11), einem Anschluss zur Spannungsversorgung (12) der Signalanordnung (11) und einem Steuereingang (13), umfassend die folgenden Schritte:
- Verbinden des Steuereingangs (13) der Signalanordnung (1) mit einem Steuerausgang (25) einer ersten Steuereinheit (2) zur Ansteuerung der Signalanordnung (1) mittels PWM-Signale oder mit einem Steuerausgang (32) einer zweiten Steuereinheit (3) zur Ansteuerung der Signalanordnung (1) mittels asymmetrischer Bus-Kommunikation;
- Zuschalten einer Versorgungsspannung U_{B} zur Signalanordnung über den Anschluss zur Spannungsversorgung (12) der Signalanordnung (1);
- Messen einer Spannung U_{DI/Bus} am Steuereingang (13) der Signalanordnung (1) innerhalb einer zuvor festgelegten Zeitspanne Δt nach dem Zuschalten der Versorgungsspannung, wobei die erste Steuereinheit (2) innerhalb der Zeitspanne Δt eine erste Spannung am Steuereingang (13) der Signalanordnung (1) generiert, und die zweite Steuereinheit (3) innerhalb der Zeitspanne Δt eine zweite Spannung am Steuereingang (13) generiert, wobei sich die erste Spannung und die zweite Spannung unterscheiden;
- Versetzen der Signalanordnung (1) in einen BUS-Modus oder in einen PWM-Modus in Abhängigkeit der gemessenen Spannung U_{DI/Bus}, wobei die Signalanordnung im BUS-Modus mittels Bus-Kommunikation angesteuert werden kann und die Signalanordnung (1) im PWM-Modus mittels PWM-Signale angesteuert werden kann.

2. Verfahren nach Anspruch 1, **dadurch gekennzeichnet, dass** zum Versetzen der Signalanordnung (1) in den BUS-Modus oder in den PWM-Modus die gemessene Spannung U_{DI/Bus} ausgewertet wird, wobei das Auswerten als Überprüfung der Spannungsdifferenz ΔU, gebildet aus der Differenz zwischen der Spannung U_{B} und der Spannung U_{DI/Bus}, gegenüber einem zuvor festgelegten Schwellenwert realisiert ist.

3. Verfahren nach Anspruch 2, **dadurch gekennzeichnet, dass** die Signalanordnung (1) in den BUS-Modus versetzt wird, wenn die Spannungsdifferenz ΔU kleiner als der Schwellenwert ist.

4. Verfahren nach Anspruch 2, **dadurch gekennzeichnet, dass** die Signalanordnung (1) in den PWM-Modus versetzt wird, wenn die Spannungsdifferenz ΔU größer als der Schwellenwert ist.

5. Verfahren nach einem der vorangehenden Ansprüche, **dadurch gekennzeichnet, dass** das Verfahren ein mehrfaches Messen der Spannung U_{DI/Bus} am Steuereingang (13) der Signalanordnung innerhalb der zuvor festgelegten Zeitspanne Δt nach dem Zuschalten der Versorgungsspannung umfasst, wobei die gemessenen Spannungen U_{DI/Bus} zur Auswertung herangezogen werden.

6. Verfahren nach einem der vorangehenden Ansprüche, **dadurch gekennzeichnet, dass** die Steuersignale der Steuereinheit (2,3) parallel an einen UART-Eingang (182) und an einen digitalen Eingang, DI-Eingang (183), eines Mikrocontrollers (18) der Signalanordnung (1) geleitet werden, und dass im BUS-Modus der Signalanordnung (1) die Steuersignale nur über den UART-Eingang (182) ausgewertet werden, und im PWM-Modus der Signalanordnung (1) die Steuersignale nur über den DI-Eingang (183) ausgewertet werden.

7. Verfahren nach einem der vorangehenden Ansprüche, **dadurch gekennzeichnet, dass** der Anschluss zur Spannungsversorgung (12) der Signalanordnung (1) mit einer externen Einspeisung (4) verbunden wird.

8. Verfahren nach einem der vorangehenden Ansprüche, **dadurch gekennzeichnet, dass** über die Verbindung zwischen der Steuereinheit (2,3) und der Signalanordnung (1) Zustandsinformationen über die Steuereinheit (2,3) übermittelt werden.

9. Verfahren nach Anspruch 8, **dadurch gekennzeichnet, dass** die von der Steuereinheit (2,3) übermittelten Zustandsinformationen von der Signalanordnung (1) mittels einer geeigneten Schnittstelle (15) zum Abrufen bereitgestellt werden.

10. Mehrfarben-Signalanordnung (1), umfassend einem Anschluss zur Spannungsversorgung (12) der Signalanordnung, einem Steuereingang (13) zur Ansteuerung der Signalanordnung sowie eine Mehrfarben-LED (11), wobei der Steuereingang (13) der Signalanordnung (1) mit einem Steuerausgang (25) einer ersten Steuereinheit (2) zur Ansteuerung der Signalanordnung (1) mittels PWM-Signale und mit einem Steuerausgang (32) einer zweiten Steuereinheit (3) zur Ansteuerung der Signalanordnung (1) mittels asymmetrischer Bus-Kommunikation verbindbar ist, und eine Versorgungsspannung U_{B} zur Versorgung der Signalanordnung (1) am Anschluss zur Spannungsversorgung (12) der Signalanordnung angelegt werden kann, wobei die erste Steuereinheit (2) innerhalb einer zuvor festgelegten Zeitspanne Δt nach dem Zuschalten der Versorgungsspannung eine erste Spannung am Steuereingang (13) generiert, und die zweite Steuereinheit (3) innerhalb der Zeitspanne Δt eine zweite Spannung am Steuereingang (13) generiert, wobei sich die erste Spannung und die zweite Spannung unterscheiden, und wobei die Signalanordnung (1) ferner geeignete Mittel zum Messen einer Spannung U_{DI/Bus} am Steuereingang (13) der Signalanordnung (1) innerhalb der Zeitspanne Δt umfasst, und die Signalanordnung Mittel zum Versetzen der Signalanordnung (1) in einen BUS-Modus oder in einen PWM-Modus aufweist, wobei die Signalanordnung (1) im BUS-Modus mittels Bus-Kommunikation angesteuert werden kann und die Signalanordnung (1) im PWM-Modus mittels PWM-Signale angesteuert werden kann.
